# FASCICULE DE BREVET EUROPEEN

(11) **EP 3 351 400 B1**
(45) Date de publication et mention de la délivrance du brevet: **26.01.2022**
(21) Numéro de dépôt: 18157231.4
(22) Date de dépôt: 21.06.2013
(51) Int. Cl.: B42D 25/351, B42D 25/369

(54) **ELÉMENT DE SÉCURITÉ ET DOCUMENT SÉCURISÉ**
SICHERHEITSELEMENT UND GESICHERTES DOKUMENT
SECURITY ELEMENT AND PROTECTED DOCUMENT

(30) Priorité: 22.06.2012 FR 1255963
(43) Date de publication de la demande: 25.07.2018
(62) Demande divisionnaire de: 13765428.1
(73) Titulaire: Oberthur Fiduciaire SAS, 75008 Paris (FR)
(72) Inventeur: CAMUS, Michel, 38140 Rives sur Fure (FR)
(74) Mandataire: Nony

(56) Documents cités:
- EP-A1- 1 669 213

## Description

La présente invention concerne les éléments de sécurité, notamment les fils de sécurité, utilisés dans les billets de banque et autres documents de valeur et de sécurité, pour contribuer à rendre plus difficile les contrefaçons et permettre de les authentifier.

De très nombreux éléments de sécurité ont été décrits, qui visent à la fois à proposer des sécurités difficiles à reproduire et à créer un aspect attractif sur le plan visuel.

EP 1 819 525 B1 et EP 1669 213 A1 divulguent un élément de sécurité comportant des pigments de forme plaquettaire pouvant être orientés sous l'effet d'un champ magnétique de façon à permettre d'observer, pour une direction d'observation sensiblement parallèle à l'orientation des pigments, une impression sous-jacente. L'élément de sécurité présente deux zones dont les pigments sont orientés différemment de manière à ce que l'on puisse observer une apparition / disparition des motifs sous-jacents quand la direction d'observation change. L'élément de sécurité peut se présenter sous la forme d'un fil.

EP 1 878 773 A2 divulgue un élément de sécurité comportant des pigments de forme plaquettaire orientés dans une direction préférentielle et déposés sur une impression sous-jacente. Suivant la direction d'observation relativement à la direction d'orientation des pigments, l'impression sous-jacente est visible ou non.

US 8,025,952 B2 divulgue un élément de sécurité comportant un substrat recouvert d'une image et revêtu de pigments plaquettaires et préférentiellement orientés. L'image latente sous-jacente est visible dans une plage d'angle prédéterminée.

WO 2008/017869 divulgue un élément de sécurité, notamment sous forme d'un fil de sécurité incorporable dans un document de sécurité, comportant un cristal photonique optiquement variable apte à générer différents effets optiques suivant la direction d'observation.

US 2005/0042449 divulgue un fil de sécurité incorporable dans un document de sécurité, comportant une structure d'interférence, par exemple une structure de type Fabry-Perot, apte à générer un effet optique variant avec la direction d'observation.

GB 2 438 384 divulgue un élément de sécurité comportant un substrat revêtu d'un film de cristaux liquides superposé à une couche de finition. Cette dernière peut se présenter sous la forme de motifs, de lettres, ou de texte, et peut être diffusante. Selon la direction d'observation, les cristaux liquides changent d'aspect. La zone recouverte par la couche de finition présente un aspect visuel variable selon la direction d'observation, et différent de celui des cristaux liquides sous-jacents.

WO 2005/106601 divulgue un élément de sécurité comportant un substrat dont l'une des faces est recouverte d'un réseau de microlentilles et l'autre face est recouverte d'un réseau de micro-images. Le réseau de microlentilles et le réseau de micro-images sont positionnés de telle sorte qu'une image agrandie soit obtenue, avec des effets optiquement variables selon la direction d'observation.

EP 2 174 796 A1 divulgue un revêtement composé de pigments présentant différentes couleurs suivant l'angle d'observation et un pigment sensible à un rayonnement laser. Ce revêtement est sélectivement irradié à l'aide d'un rayonnement laser, de telle sorte que la zone irradiée présente un aspect visuel variable, la couleur étant modifiée suivant l'angle d'observation.

Il est décrit un élément de sécurité multicouche non revendiqué, comportant :
- un support,
- une première structure optiquement variable portée par le support,
- une deuxième structure optiquement variable portée par le support, les première et deuxième structures ayant des première et deuxième régions non superposées sur le support,
- une structure d'opacité variable se superposant au moins partiellement aux première et deuxième régions, définissant d'une part des première et deuxième zones de moindre opacité se superposant au moins partiellement respectivement avec les première et deuxième régions et définissant d'autre part une zone environnante de plus grande opacité s'étendant autour des première et deuxième zones,

la surface couverte par les première et deuxième zones de moindre opacité étant moins étendue que la surface couverte par la zone environnante de plus grande opacité,
les première et deuxième structures étant agencées de telle sorte que, pour une première direction d'observation, les première et deuxième structures optiquement variables aient, lorsqu'observées simultanément à travers respectivement les première et deuxième zones de moindre opacité, des aspects différents l'une de l'autre et, pour une deuxième direction d'observation différente de la première, les première et deuxième structures aient, lorsqu'observées simultanément à travers respectivement les première et deuxième zones de moindre opacité, d'une part changé d'aspect par rapport à leurs aspects lorsqu'observées selon la première direction d'observation, et d'autre part aient des aspects différents l'une de l'autre.

Un effet visuel attractif est ainsi obtenu grâce à cet élément de sécurité non revendiqué.

Par exemple, une caractéristique optique particulière, notamment un effet de réflexion brillante, peut passer de la première zone de moindre opacité à la deuxième zone de moindre opacité avec un changement de la direction d'observation, une caractéristique optique de la zone de plus grande opacité (notamment sa couleur) étant par exemple conservée. On obtient une variation de l'aspect visuel de la première et de la deuxième structure optiquement variable, au travers des première et deuxième zones de moindre opacité, en choisissant la structure d'opacité variable de façon adaptée. Ainsi, il est possible de définir des première et deuxième zones de moindre opacité prenant la forme d'une lettre, d'un texte, d'un motif ou d'un dessin pour qu'elles présentent seules dans l'élément de sécurité un aspect optiquement variable.

Par « opacité », on considère l'atténuation de l'intensité d'un illuminant qui traverse un matériau. L'opacité d'un matériau peut varier entre une opacité nulle (ou transparence) et une opacité totale, où l'illuminant n'est pas transmis.

Par « illuminant », on entend une lumière visible par l'oeil humain, par exemple l'illuminant D65 reproduisant la lumière du jour, défini par CIE Lab 1976, un rayonnement infrarouge (IR) ou un rayonnement ultraviolet (UV).

Par « opacité variable » on considère une structure qui présente en différentes zones des propriétés d'absorption différentes d'un illuminant prédéfini, notamment de la lumière visible.

Dans un exemple, pour une observation en lumière visible, l'élément de sécurité comporte une structure d'opacité variable obtenue par métallisation/démétallisation. Cette structure comporte une zone environnante de plus grande opacité correspondant à une couche de métal et des zones de moindre opacité correspondant à des ajours résultant de la démétallisation. En lumière visible, la couche de métal apparait totalement opaque et les ajours sont transparents.

Dans un autre exemple, pour une observation sous un illuminant UV ou IR, la structure d'opacité variable comporte une impression, sur la zone de plus grande opacité, avec une encre comportant un pigment transparent lorsqu'observé en lumière visible mais opaque lorsqu'illuminé sous UV ou IR.

La structure d'opacité variable peut recouvrir totalement ou partiellement les première et deuxième structures optiquement variables. De préférence, la surface couverte par les première et deuxième zones de moindre opacité est 1,5 fois, de préférence 2 fois, de préférence encore 3 fois, voire 5 fois, voire même encore 10 fois, moins étendue que la surface couverte par la zone environnante de plus grande opacité. On peut définir des première et deuxième zones de moindre opacité prenant la forme de lettres, d'un texte, d'un motif, d'un dessin de faibles dimensions par rapport à celles de l'élément de sécurité. De cette façon, on peut notamment concentrer sur ces première et deuxième zones de moindre opacité l'attention de l'observateur qui authentifie un document comportant un tel élément.

Dans un cas particulier, la superposition de la zone de plus grande opacité avec les première et deuxième structures optiquement variables définit respectivement des première et deuxième zones optiquement variables, de sorte que lorsqu'observée selon une première direction d'observation, respectivement selon une deuxième direction différente de la première, la première zone optiquement variable, respectivement la deuxième zone optiquement variable, présente un aspect visuel différent de la deuxième zone, respectivement de la première zone, et notamment apparaisse plus claire, respectivement plus sombre.

L'élément de sécurité peut se présenter sous la forme d'un fil (« security thread » en anglais), d'un foil ou d'un patch.

De préférence, les première et deuxième structures optiquement variables comportent des particules plaquettaires orientées différemment dans les première et deuxième régions. Ces particules plaquettaires peuvent être magnétiques. Leur orientation peut ainsi être modifiée par application d'un champ magnétique, par exemple au cours de la fabrication de l'élément de sécurité. Ces particules plaquettaires magnétiques peuvent par exemple être celles décrites dans le brevet EP 1 819 525 B1. Elles peuvent recouvrir des impressions sous-jacentes ou des éléments de motifs réalisés autrement que par impression. Elles peuvent être déposées sur le support précité, lequel est de préférence transparent.

Pour des particules plaquettaires orientées, il existe un premier angle d'observation selon lequel les particules réfléchissent. Dans ce cas, il n'est pas possible de voir en transparence, notamment un motif imprimé ou une couleur située dessous. Il existe aussi un deuxième angle d'observation selon lequel les particules ne sont pas orientées de manière à pouvoir réfléchir la lumière. On peut alors voir en transparence au travers de l'élément de sécurité, en particulier un motif ou une couleur disposé en dessous.

Les première et deuxième structures optiquement variables peuvent aussi comporter chacune un réseau lenticulaire. Les lentilles du réseau lenticulaire permettent d'observer ou non, selon l'angle d'observation, au moins un élément de motif sous-jacent.

Lorsqu'observée en réflexion selon une première direction d'observation à travers la première (respectivement la deuxième) zone de moindre opacité, la première (respectivement la deuxième) structure optiquement variable peut apparaitre transparente (respectivement réfléchissante). Lorsqu'observée simultanément selon une deuxième direction d'observation différente de la première à travers la première (respectivement la deuxième) zone de moindre opacité, c'est l'inverse qui peut se produire, la première structure (respectivement la deuxième) structure optiquement variable peut apparaître réfléchissante (respectivement transparente).

Les première et deuxième structures optiquement variables peuvent comporter un composé luminescent, par exemple fluorescent, ce composé étant présent selon un ou plusieurs motifs. Ainsi les deux étapes d'observation de l'élément de sécurité selon des angles différents font apparaître en réflexion une ou plusieurs couleurs produites par luminescence, de préférence des couleurs différentes, au travers des zones de moindre opacité.

De préférence, les première et deuxième structures optiquement variables s'étendent longitudinalement sur le support. Elles peuvent se présenter sous forme de bandes, notamment de largeur constante. L'une des structures optiquement variables peut partiellement recouvrir l'autre structure, le cas échéant.

Le support peut être réalisé dans une matière thermoplastique, de préférence une matière thermoplastique transparente, notamment du polyester ou du PET.

De préférence, l'élément de sécurité se présente sous la forme d'un fil de sécurité, de préférence d'une largeur allant de 1 à 10 mm, de préférence encore de 4 à 8 mm.

De préférence, la structure d'opacité variable s'étend longitudinalement le long du support, et peut se présenter sous la forme d'une bande. La zone de plus grande opacité peut définir les bords opposés de cette bande, lesquels peuvent être continus, les zones de moindre opacité s'étendant en retrait de ces bords.

De préférence, la largeur de la structure d'opacité variable est comprise entre 1 à 10 mm, de préférence encore de 4 à 8 mm.

La zone de plus grande opacité de la structure d'opacité variable peut être continue. En variante, elle est discontinue. Par exemple, elle est séparée en au moins deux parties distinctes par une trame ou est pixélisée de sorte à former un motif se présentant en trois dimensions. Dans le cas où la structure d'opacité variable est discontinue, la zone de plus grande opacité peut être discontinue à l'échelle microscopique, tout en apparaissant sensiblement continue à l'oeil nu. Lorsqu'elle est formée par métallisation/démétallisation, son opacité est alors intermédiaire entre celle d'une zone démétallisée pleine et celle d'une zone entièrement métallisée. Dans un exemple, la zone de plus grande opacité est pixellisée (incluant tramée), les zones de moindre opacité étant dépourvues de pixels ou de trame. La zone de plus grande opacité peut former une image tridimensionnelle lorsqu'observée en lumière transmise.

Avantageusement, une région totalement opaque de la structure d'opacité variable se superpose à ou bien recouvre la zone où l'une des structures optiquement variables est en recouvrement de l'autre, lorsqu'un tel recouvrement existe. Ainsi, les imperfections de surépaisseur et optiques dues au recouvrement peuvent être rendues visibles. La possibilité d'un recouvrement partiel entre les première et deuxième structures optiquement variables simplifie leur positionnement relatif lors de la fabrication de l'élément de sécurité.

La structure d'opacité variable peut présenter une opacité qui est fonction du type d'illuminant utilisé pour l'observation.

La structure d'opacité variable peut comporter, voire être constituée par :
- une métallisation/démétallisation, notamment avec une démétallisation qui représente une ou plusieurs lettres, un dessin, un motif ; dans ce cas, les zones de moindre opacité correspondent aux zones démétallisées et les zones de plus grande opacité correspondent aux zones métallisées ; le ou les motifs formés par les zones démétallisées peuvent se retrouver ailleurs sur le document qui intègre l'élément de sécurité ; il s'agit par exemple de la valeur de la coupure, de la devise ou du nom du pays ou de la banque émettrice ; le métal peut être choisi par exemple parmi l'argent, l'aluminium, le nickel, le cobalt, l'étain, l'or, le cuivre, et parmi les alliages de métaux, notamment le laiton ou le bronze ; le métal peut être remplacé par tout matériau diélectrique ; des structures diélectriques à effet miroir ou interférentiel constitués d'une alternance de couches de haut et de bas indice, par exemple respectivement du dioxyde d'hafnium et de la silice, notamment obtenus par gravure ionique , peuvent être utilisés.
- une structure en un matériau coloré ou à effet goniochromatique, métallique, holographique, entre autres possibilités, afin de faire varier l'opacité de la structure sur des zones prédéfinies,
- une structure en un matériau dont l'opacité peut varier par exemple par application sélective sur des zones définies d'un traitement thermique ou d'un traitement laser,
- une structure obtenue par embossage, notamment à chaud, d'un matériau aux propriétés initiales d'absorption de la lumière homogènes, de sorte que la variation d'opacité résulte de la variation d'épaisseur causée par l'embossage,
- une impression avec différentes encres, colorées ou non, visibles à l'oeil nu ou non, par exemple des encres visibles uniquement sous lumière ultraviolette ou infrarouge, opaques en lumière visible, fluorescentes, phosphorescentes, thermochromiques, photochromiques, translucides et/ou transparentes,
- une structure comportant une image pixellisée ou tramée produisant un effet visuel de profondeur quand observée en lumière transmise, comme par exemple celle décrite dans EP-A-1674286.

L'image peut représenter un portrait, un animal, un paysage, un symbole, notamment alphanumérique, une ligne, un guilloché. Elle peut comporter un ensemble de points paraissant plus ou moins éloignés, lorsqu'observée en lumière transmise. Ces points peuvent être de formes et/ou de tailles variées, avec éventuellement une modulation fréquentielle spécifique. Par exemple, les points peuvent être sous une forme carrée, ronde, diamant ou allongée, telle qu'une ligne, et peuvent former une trame. Les points peuvent s'aligner en lignes inclinées selon des angles spécifiques, avec une modulation fréquentielle spécifique. Les points peuvent définir des images en positif et/ou en négatif. L'image pixellisée peut comprendre des points observables sous rayonnement ultraviolet (UV) et/ou infrarouge (IR). Ces points peuvent contenir des pigments visibles sous rayonnement UV ou IR et invisibles en lumière du jour. L'image pixellisée peut contenir des points qui, au moins partiellement, représentent des données codées, en particulier sous forme matricielle. Par exemple, le code peut être relié à la position spatiale des points et/ou à des opacités et/ou à des tailles et/ou à des formes et/ou à des épaisseurs et/ou à des couleurs desdits points. L'image pixellisée est constituée d'au moins un matériau sélectionné parmi les métaux, les alliages, les vernis et les encres métalliques, les vernis et les laques d'apparence métallique. Les points sont préférentiellement appliqués sur le support de l'élément de sécurité par impression et/ou par les techniques de métallisation et/ou de démétallisation partielle. L'image pixellisée peut être réalisée en plusieurs couches, appliquées sur le support de l'élément de sécurité, et/ou sur les première et deuxième structures optiquement variables, et avoir de préférence différentes densités optiques. Ainsi, ces différentes couches aux différentes densités optiques produisent un motif, des symboles, des lettres, des lignes qui définissent un effet visuel de profondeur quand observée en lumière transmise. D'autres couches ayant des propriétés optiques et/ou magnétiques et/ou électriques décrites EP-A-1674286 peuvent être présentes.

Par « effet visuel de profondeur » on considère un effet visuel par lequel différents éléments définissant une image plane, notamment des pixels de l'image, paraissent plus ou moins éloignés à l'observateur en raison d'un effet de perspective. Par exemple, une marque ou une image constituée de trame ou de points apparait comme une marque ou une image tridimensionnelle lorsqu'elle est vue en lumière transmise.

Les première et deuxième structures optiquement variables peuvent être espacées l'une de l'autre, pour faciliter la fabrication et définir une zone neutre dans laquelle une troisième structure de sécurité peut s'étendre, le cas échéant.

La zone neutre a une largeur allant de préférence de 0,2 à 1,5 mm, de préférence encore de 0,4 à 0,8 mm.

La troisième structure peut s'étendre longitudinalement et être située visuellement au moins partiellement entre les première et deuxième structures optiquement variables. La troisième structure peut élever le niveau de sécurité de l'élément de sécurité et peut servir de zone de tolérance pour faciliter la réalisation des deux structures optiquement variables.

De préférence, la structure d'opacité variable se superpose à ou recouvre, au moins partiellement, cette troisième structure de sécurité, lorsque présente, et peut définir le cas échant une troisième zone de moindre opacité à travers laquelle la troisième structure de sécurité est au moins partiellement, voire entièrement, visible.

La troisième structure peut aussi être superposée à ou recouverte, notamment entièrement par la zone de plus grande opacité. Dans une réalisation particulière, elle est invisible à l'observateur sous lumière visible et elle est décelée sous un autre illuminant, par exemple un rayonnement ultraviolet (UV) ou infrarouge (IR).

La troisième structure peut présenter une caractéristique de sécurité de premier, deuxième ou troisième niveau.

Par « sécurité de premier niveau » il faut comprendre une sécurité détectable à l'œil, en lumière du jour ou en lumière artificielle, sans utilisation d'un appareil particulier.

D'autres types de structures de sécurité sont détectables seulement à l'aide d'un appareil relativement simple, tel qu'une lampe émettant dans l'ultraviolet (UV) ou l'infrarouge (IR). Ces structures de sécurité peuvent être visibles à l'oeil nu ou non, étant par exemple luminescentes sous un éclairage d'une lampe de Wood émettant dans une longueur d'onde de 365 nm. Ces structures de sécurité sont dites de deuxième niveau.

D'autres types de structures de sécurité nécessitent pour leur détection un appareil de détection plus sophistiqué. Ces structures de sécurité sont par exemple capables de générer un signal spécifique lorsqu'elles sont soumises, de manière simultanée ou non, à une ou plusieurs sources d'excitation extérieure. La détection automatique du signal permet d'authentifier, le cas échéant, la structure. Ces structures de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces structures de sécurité sont dites de troisième niveau.

La troisième structure de sécurité peut comporter, voire être constituée par :
- une métallisation/démétallisation, notamment avec une démétallisation qui représente un même motif qu'un motif présent, notamment imprimé, entre les première et deuxième zones optiquement variables ou au niveau de celles-ci, de sorte à constituer un élément de comparaison,
- une bande magnétique, créant une sécurité de troisième niveau, ou
- un élément coloré ou à effet goniochromatique, métallique, holographique, entre autres possibilités.

La troisième structure peut se superposer à, ou recouvrir, au moins partiellement l'une des première et deuxième structures optiquement variables, lorsque l'élément de sécurité est observé de face. La troisième structure de sécurité peut être plus large que l'intervalle existant entre les premier et deuxième éléments de sécurité.

La troisième structure peut se superposer à ou recouvrir au moins partiellement à la fois les première et deuxième structures optiquement variables.

La troisième structure peut s'étendre selon une bande continue ou discontinue.

La troisième structure peut être disposée d'un côté du support et les première et deuxième structures être disposées du côté opposé du support.

La troisième structure de sécurité peut comporter un motif de sécurisation constitué au moins d'un premier motif formé à partir de substances présentant un effet interférentiel et d'un second motif formé à partir de substances réagissant à certaines stimulations, tels que rayonnement lumineux ou stimulation calorifique, magnétique, électromagnétique, électrique ou de type micro-ondes, en donnant une réponse lumineuse visible par un œil humain ou un signal spécifique détectable à l'aide d'un appareil adapté.

De ce point de vue, il peut être avantageux de prévoir un motif de sécurisation de type alphanumérique, dans lequel une partie des signes ou lettres est formée par le premier motif et l'autre partie de ces mêmes signes ou lettres est formée par le second motif. Sous observation normale, c'est-à-dire sous une lumière blanche, le motif de sécurisation est illisible, les lettres ou signes étant à moitié tronqués par exemple. En revanche, sous l'action d'une stimulation externe, comme une élévation de température par exemple, le motif final apparaît dans son intégralité.

Il est aussi envisageable de prévoir un motif de sécurisation de type alphanumérique, dans lequel certains signes ou lettres sont formés par le premier motif et certains autres signes ou lettres sont formés par le second motif. Sous observation normale, c'est-à-dire sous une lumière blanche, le motif de sécurisation présente, de cette façon, un effet interférentiel uniforme selon le premier motif, le second motif étant alors invisible. Par contre, sous l'action d'une stimulation externe, telle qu'une lumière émettant un rayonnement ultraviolet par exemple, le second motif de type alphanumérique est révélé le temps de la stimulation.

Pour fabriquer l'élément de sécurité, notamment lorsqu'il constitue un fil de sécurité, la première structure optiquement variable peut être réalisée sur un film destiné à constituer le support, sous la forme de bandes parallèles espacées et la deuxième structure optiquement variable peut être réalisée sous la forme de bandes parallèles espacées, entrelacées avec les bandes formées par la première structure, le film étant découpé à milargeur des bandes de la première structure et des bandes de la deuxième structure pour constituer par exemple une pluralité d'éléments de sécurité, notamment une pluralité de fils de sécurité. Un recouvrement partiel entre les bandes parallèles de la première et de la deuxième structure optiquement variables est possible. Alternativement, les bandes de la première et de la deuxième structure optiquement variables sont déposées avec un espacement entre les bandes, pour définir la zone neutre précitée et, pour permettre d'installer, par exemple, une troisième structure de sécurité.

Les bandes peuvent être réalisées par impression, par exemple en passes successives sur le film. Le film peut être retourné entre les passes, par exemple en effectuant une rotation autour d'un axe perpendiculaire à la surface du film, ce qui constitue un moyen simple et efficace pour orienter les particules plaquettaires différemment, dans le cas où les première et deuxième structures optiquement variables sont constituées par des particules réfléchissantes orientables sous l'effet d'un champ magnétique.

Il est aussi décrit un document sécurisé, non revendiqué, comportant un substrat et un élément de sécurité comportant :
- un support,
- une première structure optiquement variable portée par le support,
- une deuxième structure optiquement variable portée par le support, les première et deuxième structures ayant des première et deuxième régions, non superposées sur le support,
- une structure d'opacité variable recouvrant au moins partiellement les première et deuxième régions, définissant des première et deuxième zones de moindre opacité se superposant au moins partiellement respectivement avec les première et deuxième régions et une zone environnante de plus grande opacité, l'élément de sécurité étant disposé sur le substrat de telle sorte que les première et deuxième régions soient visibles à travers la structure d'opacité variable, les première et deuxième structures étant agencées de telle sorte que pour une première direction d'observation, les première et deuxième structures aient lorsqu'observées simultanément à travers respectivement les première et deuxième zones de moindre opacité des aspects différents l'une de l'autre et, pour une deuxième direction d'observation différente de la première, les première et deuxième structures aient lorsqu'observées simultanément à travers respectivement les première et deuxième zones de moindre opacité, d'une part changé d'aspect par rapport à leur aspect lorsqu'observées selon la première direction d'observation, et d'autre part aient des aspects différents l'une de l'autre.

Par « document sécurisé », on désigne un moyen de paiement, tel qu'un billet de banque, un chèque ou un ticket restaurant, un document d'identité, tel qu'une carte d'identité, un visa, un passeport ou un permis de conduire, un ticket de loterie, un titre de transport ou encore un ticket d'entrée à une manifestation culturelle ou sportive.

Un effet visuel intéressant est obtenu grâce au document sécurisé. En observant le document sécurisé de points d'observation distincts, une caractéristique optique de l'élément de sécurité et/ou du document sécurisé, peut passer visuellement de la première à la deuxième structure optiquement variable, observées au travers de la structure d'opacité variable, et vice versa. De cette façon, il est possible d'authentifier le document sécurisé grâce à l'élément de sécurité.

Le document sécurisé peut comporter l'élément de sécurité non revendiqué. En variante, il peut comporter un élément de sécurité qui n'est pas celui non revendiqué en ce sens que la surface couverte par les première et deuxième zones de moindre opacité est aussi ou plus étendue que la surface couverte par la zone de plus grande opacité.

L'élément de sécurité peut être disposé en fenêtre(s). Il peut s'étendre d'un bord à l'autre du document. L'élément de sécurité peut aussi être disposé entièrement en surface du document et/ou sous forme de patch.

Dans un exemple de mise en œuvre, l'élément de sécurité se présente sous forme d'un patch, dans lequel les zones de moindre opacité se superposent à des images et la zone de plus grande opacité définit de fins liserés autour de ces images.

Dans un exemple, l'écart de couleur ΔE dans l'espace colorimétrique CIE Lab entre la région du document qui s'étend autour de l'élément de sécurité et la structure d'opacité variable est inférieur à 5, mieux à 2. Ainsi, la couleur de la structure d'opacité variable est proche de celle du document autour de l'élément de sécurité. Dans ce cas, selon au moins un angle d'observation, l'élément de sécurité ne peut être visuellement distingué de la région du document adjacente à l'élément de sécurité. Sous un autre angle d'observation, un motif défini par la première et/ou la deuxième zone de moindre opacité devient par exemple réfléchissant alors que la couleur de la zone de plus grande opacité et du document autour de la structure d'opacité variable est sensiblement inchangée.

Le ou les motifs définis par les zones de moindre opacité de l'élément de sécurité peuvent se retrouver ailleurs sur le document sécurisé et ainsi établir un lien entre le document sécurisé et l'élément de sécurité. De préférence, dans le cas où le document sécurisé est un billet de banque, le motif représente par exemple la devise, le nom de la banque ou la valeur de la coupure.

Il est aussi décrit un procédé, non revendiqué, d'authentification ou d'identification du document sécurisé non revendiqué, dans lequel on détermine, lors de l'authentification du document si, lorsque l'angle d'observation change, l'aspect d'une zone de l'élément de sécurité disparaît et se retrouve sur une autre zone.

Le document ou l'élément de sécurité non revendiqué qu'il comporte peut comporter un ou plusieurs éléments de sécurité supplémentaires de premier, deuxième ou troisième niveau, tels que définis plus haut.

Il est aussi décrit un procédé de fabrication non revendiqué d'un élément de sécurité non revendiqué.

Plus particulièrement, ce procédé peut comporter une étape de préparation d'une structure d'opacité variable, de préférence par démétallisation, notamment par attaque chimique, d'une couche de métal recouvrant le support et recouverte par l'impression d'un vernis, ce dernier protégeant vis-à-vis de l'attaque chimique. En variante, un primaire soluble dans un solvant est appliqué sur le support selon le négatif du motif à réaliser avant la métallisation, puis cette dernière est effectuée. L'attaque chimique solubilise le primaire et le métal quitte le support aux emplacements où le primaire soluble est présent. La couche de métal est de préférence déposée par métallisation sous vide.

Il est encore décrit un procédé, non revendiqué, de fabrication d'un document sécurisé non revendiqué. Plus particulièrement, le procédé de fabrication peut comporter une étape d'incorporation ou de dépôt d'un élément de sécurité non revendiqué, dans ou sur un substrat du document.

L'invention a pour objet un élément de sécurité multicouche comportant :
- un support, notamment tel que décrit plus haut,
- une structure optiquement variable portée par le support notamment tel que décrite plus haut, notamment sous forme de particules plaquettaires orientées, de façon à être réfléchissante dans une première direction d'observation, et transparente dans une deuxième direction d'observation,
- une image pixellisée, notamment tel que décrite plus haut, superposée à la structure optiquement variable, conférant une impression de relief lorsqu'observée en lumière transmise dans la deuxième direction d'observation, cette impression de relief diminuant en observation en lumière réfléchie dans la première direction d'observation,

l'image pixellisée produisant un effet visuel de profondeur quand observée en lumière transmise,
un effet visuel de profondeur étant un effet visuel par lequel différents éléments définissant une image plane paraissent plus ou moins éloignés à un observateur en raison d'un effet de perspective,
l'image pixellisée comportant un ensemble de points paraissant plus ou moins éloignés, lorsqu'observée en lumière transmise, les points étant de formes et/ou de tailles variées.

D'autres caractéristiques de l'invention sont revendiquées dans les revendications dépendantes.

L'image pixellisée peut être une structure d'opacité variable telle que décrite ci-dessus.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente, de face, un exemple de document sécurisé utile à la compréhension de l'invention,
- la figure 2 représente à échelle agrandi le détail I du document sécurisé de la figure 1,
- la figure 3 représente isolément, en coupe transversale, un élément de sécurité utile à la compréhension de l'invention,
- les figures 4 et 5, utiles à la compréhension de l'invention, représentent de manière schématique et partielle, en coupe transversale des exemples de réalisation des zones optiquement variables,
- les figures 6 à et 8, utiles à la compréhension de l'invention, représentent isolément, en coupe transversale, des variantes de réalisation de l'élément de sécurité,
- les figures 9 et 10, utiles à la compréhension de l'invention, illustrent un changement d'aspect d'un exemple d'élément de sécurité lors d'une modification de la direction d'observation,
- les figures 11 et 12, utiles à la compréhension de l'invention, illustrent un changement d'aspect de l'élément de sécurité dans une variante de réalisation,
- les figures 13 et 14, utiles à la compréhension de l'invention, illustrent des variantes de réalisation de la zone optiquement variable,
- la figure 15, utile à la compréhension de l'invention, représente en vue de face un élément de sécurité observé en lumière transmise,
- les figures 16, 17 et 18 illustrent un exemple de réalisation de l'élément de sécurité selon l'invention, dans lequel la structure d'opacité variable comporte une image pixellisée.
- La figure 19 illustre une variante de réalisation de l'élément de sécurité, comportant une trame,
- les figures 20 et 21, utiles à la compréhension de l'invention, illustrent la réalisation des zones optiquement variables par impression,
- les figures 22 et 23, utiles à la compréhension de l'invention, représentent, en coupe transversale, une variante de réalisation des zones optiquement variables,
- les figures 24 et 25 utiles à la compréhension de l'invention, illustrent le changement d'aspect des zones optiquement variables des variantes des figures 22 et 23 avec la modification de la direction d'observation,
- la figure 26, utile à la compréhension de l'invention, représente en vue de face un document sécurisé ,
- la figure 27 utile à la compréhension de l'invention, est une coupe transversale selon XXVII-XXVII de la figure 26,
- la figure 28 utile à la compréhension de l'invention, représente en coupe transversale une variante dans laquelle l'élément de sécurité est disposé en surface du document sécurisé,
- la figure 29, utile à la compréhension de l'invention, représente une variante de réalisation d'un document sécurisé, et
- les figures 30, 31, 32 et 33, utiles à la compréhension de l'invention, représentent de manière schématique et partielle, en coupe transversale, des éléments de sécurité hors de l'invention comportant chacun une structure d'opacité variable, suivant différents modes de réalisation.

Dans le dessin annexé, les proportions réelles des divers éléments constitutifs ou leurs espacements n'ont pas été toujours été respectées dans un souci de clarté. Par ailleurs, certains éléments peuvent ne pas avoir été représentés en contact les uns avec les autres dans un souci de clarté, alors qu'ils le sont en pratique.

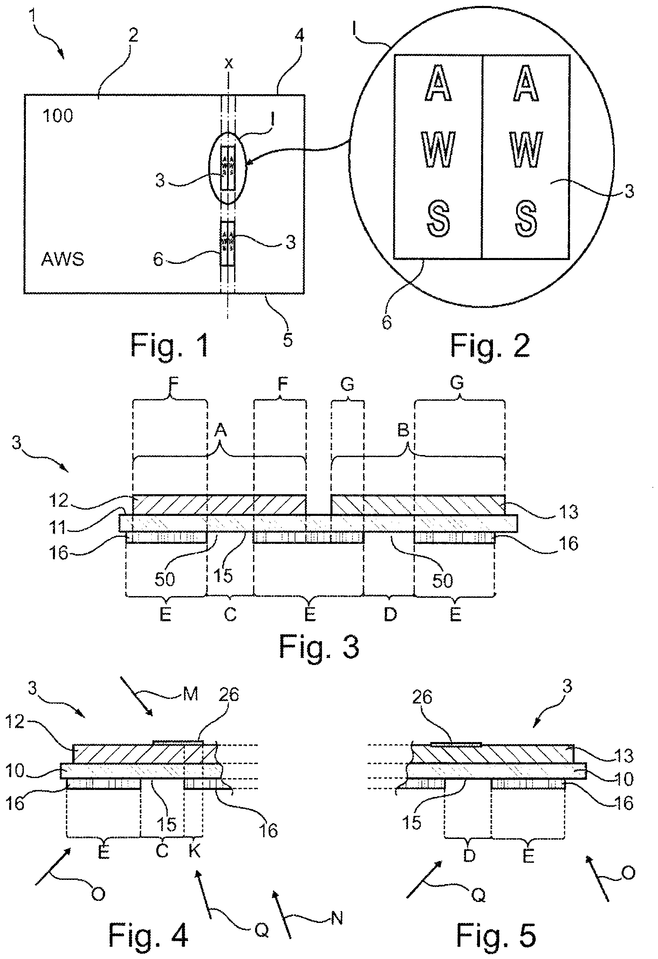

On a représenté sur les figures 1 et 2 un document sécurisé 1, par exemple un billet de banque, qui comporte un substrat 2 et un élément de sécurité 3 selon l'invention. L'élément de sécurité 3 peut s'étendre longitudinalement le long d'un axe X entre deux bords opposés 4 et 5 du document, étant par exemple comme illustré un fil de sécurité.

L'élément de sécurité 3 peut être incorporé au moins partiellement en masse dans le substrat 2 du document sécurisé et une partie seulement de l'élément de sécurité 3 apparaît visible, par exemple à travers une ou plusieurs fenêtres 6 formées dans le substrat, comme illustré à la figure 1. Un exemple d'incorporation en fenêtres est décrit dans le brevet EP 59056.

De préférence, le substrat 2 comporte des matériaux fibreux naturels, par exemple de la cellulose et/ou du coton, et/ou des fibres synthétiques. Le substrat peut aussi être réalisé au moins partiellement à partir de matériaux thermoplastiques, comme par exemple le film Polyart^{®} de la société ARJOBEX Ltd.

On a représenté isolément à la figure 3 l'élément de sécurité 3. Celui-ci comporte un support 10, de préférence en une matière thermoplastique transparente, par exemple du polyester ou du PET.

Le support 10 est de section transversale aplatie, notamment rectangulaire, comme illustré. L'épaisseur du support 10 est comprise par exemple entre 8 et 30 microns, de préférence entre 12 et 23 microns.

Le support 10 porte sur l'une 11 de ses faces des première 12 et deuxième 13 structures optiquement variables, composées par exemple de particules plaquettaires. L'orientation des particules plaquettaires de la première structure 12 est différente de celles de la deuxième structure 13. Les première 12 et deuxième 13 structures optiquement variables peuvent par exemple être déposées sous forme de bandes parallèles, en particulier dans le cas où l'élément de sécurité se présente sous la forme d'un fil de sécurité, comme dans l'exemple considéré. Les première 12 et deuxième 13 structures optiquement variables occupent dans l'exemple de la figure 3 des régions A et B non superposées sur le support 10, lorsque celui-ci est observé de face.

Le support 10 peut porter, comme illustré, sur sa face opposée 15 une structure d'opacité variable 16, par exemple réalisée par métallisation/démétallisation, qui se superpose aux régions A et B et définit des première C et deuxième D zones de moindre opacité se superposant respectivement aux régions A et B et une zone environnante E de plus grande opacité.

L'aire occupée par la zone E de plus grande opacité peut être plus grande que la somme des aires des zones C et D de moindre opacité.

Du fait que les particules plaquettaires des première 12 et deuxième 13 structures optiquement variables sont orientées différemment, comme illustré aux figures 4 et 5, pour une première direction d'observation O parallèle à la direction d'orientation des particules plaquettaires, du côté de la face 15 du support 10, l'une de la première 12 et de la deuxième 13 structure optiquement variable apparaît transparente, ou laisse apparaitre une impression sous jacente éventuelle 26, dans le cas où une telle impression est présente. Ainsi, lorsque l'élément de sécurité est observé au travers de la structure d'opacité variable 16, un premier effet visuel est obtenu, correspondant à une différence de contraste et/ou de couleur entre les première C et deuxième D zones de moindre opacité d'une part et, d'autre part, avec la zone environnante de plus grande opacité E.

Pour une direction d'observation Q différente de la première direction O, les particules plaquettaires sont réfléchissantes. Un deuxième effet visuel est obtenu, l'aspect réfléchissant des particules plaquettaires étant visible à travers l'une de la première C et de la deuxième D zone de moindre opacité et, potentiellement, à travers la zone environnante de plus grande opacité E, pourvu qu'elle ne soit pas totalement opaque. La lumière réfléchie par les particules plaquettaires peut être atténuée différemment par les première C et deuxième D zones de moindre opacité et par la zone E de plus grande opacité, ce qui procure un deuxième effet visuel différent du premier.

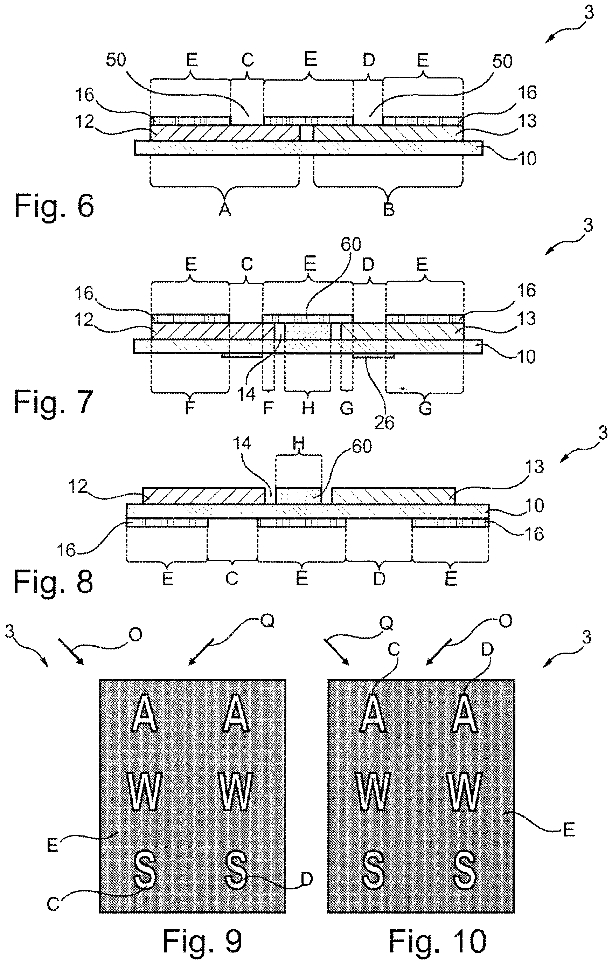

Dans la variante représentée sur la figure 6, la structure d'opacité variable 16 recouvre les première 12 et deuxième 13 structures optiquement variables, étant du même côté du support 10 que celles-ci, alors que dans l'exemple de la figure 3 elle est située du côté opposé.

Dans les exemples des figures 3 et 6, les zones de moindre opacité C et D sont définies par des ajours 50 de la structure d'opacité variable 16, par exemple à l'aide d'une démétallisation. Ainsi, dans le cas où la structure d'opacité variable 16 est située entre l'observateur et les première 12 et deuxième 13 structures optiquement variables, l'observateur, en modifiant l'angle d'observation, peut observer le changement d'aspect des première 12 et deuxième 13 structures optiquement variables au travers des première C et deuxième D zones de moindre opacité.

Une zone de recouvrement entre la première 12 et la deuxième 13 structure optiquement variable peut être présente. En variante, un intervalle définissant une zone neutre 14 entre la première et la deuxième structure de sécurité peut être présent, accueillant par exemple une troisième structure de sécurité 60, comme illustré sur les figures 7 et 8. La superposition de la structure d'opacité variable 16 avec la troisième structure de sécurité 60 définit une zone H au travers de laquelle la troisième structure de sécurité peut être visible, par exemple directement en observant à travers une zone de moindre opacité de la structure d'opacité variable, par exemple une zone formée par démétallisation.

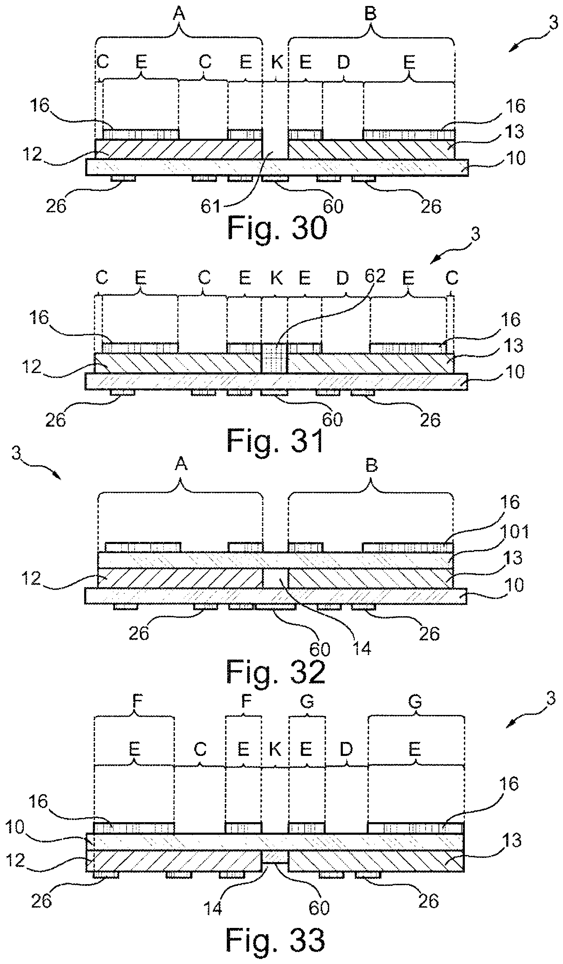

Sur les exemples des figures 30 et 31, on a représenté un élément de sécurité 3 dont les structures optiquement variables 12 et 13 sont recouvertes d'une structure d'opacité variable 16, par exemple une métallisation/démétallisation ou une impression. Les première 12 et deuxième 13 structures ont des première A et deuxième B régions, non superposées sur le support 10.

La structure d'opacité variable 16 définit une première C et une deuxième D zones de moindre opacité qui se superposent respectivement aux première 12 et deuxième 13 structures optiquement variables. La structure d'opacité variable 16 définit une troisième zone de moindre opacité K qui se superpose à la troisième structure de sécurité 60. Une zone environnante de plus grande opacité E s'étend autour des première C, deuxième D et troisième K zones.

Sur l'exemple de la figure 30, la troisième zone de moindre opacité K est obtenue à l'aide d'un ajour 61, par exemple longitudinal, réalisé au sein de la structure d'opacité variable 16. Cet ajour 61 peut séparer la structure d'opacité variable 16 en deux parties distinctes.

Sur l'exemple de la figure 31, la troisième structure de sécurité 60 est visible à travers la troisième zone de moindre opacité K, une région 62 du matériau de la structure d'opacité variable 16 présentant une plus faible opacité que son voisinage. De préférence, la région 62 est transparente.

Dans l'exemple de la figure 32, un deuxième support 101, par exemple en PET, de préférence transparent, est utilisé pour faciliter le dépôt de la structure d'opacité variable 16 et protéger les structures optiquement variables 12 et 13. Ce support peut faciliter la fabrication de la structure d'opacité variable par un procédé de métallisation/démétallisation.

Dans une variante non illustrée, la troisième structure de sécurité 60 est disposée dans l'intervalle 14 sur la face du support 10 qui porte les deux structures optiquement variables 12 et 13.

Sur la figure 33, la structure d'opacité variable 16 et les première 12 et deuxième 13 structures optiquement variables sont situées sur des faces respectives opposées du support 10.

Des impressions 26 peuvent éventuellement être disposées sur la face du support 10 opposée à celle où sont disposées les structures optiquement variables 12 et 13, et être partiellement ou totalement visibles lorsqu'observées au travers des première et deuxième zones de moindre opacité C et E, comme illustré figures 7 et 30 à 32.

Dans un exemple, la zone environnante de plus grande opacité E est totalement opaque, si bien qu'il n'est pas possible de voir les particules plaquettaires réfléchissantes au travers de la zone environnante de plus grande opacité E, comme illustré aux figures 9 et 10. La zone environnante de plus grande opacité E présente une caractéristique visuelle, par exemple une couleur, uniforme et non variable avec l'angle d'observation. Dans la direction d'observation O ou Q, un aspect réfléchissant des particules plaquettaires n'est visible qu'à travers l'une des première C et deuxième D zones de moindre opacité. Les figures 10 illustrent l'aspect visuel des zones C et D pour deux directions d'observation différentes, où l'une des zones parait réfléchissante et l'autre transparente.

Dans un exemple, la zone de plus grande opacité E n'est pas totalement opaque et transmet une partie d'un illuminant, par exemple de la lumière visible.

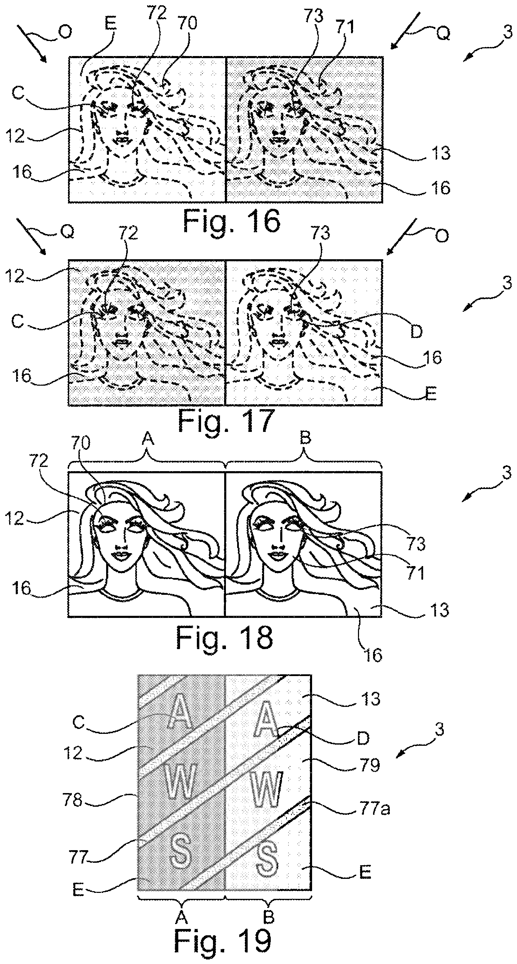

Comme illustré sur les figures 3 et 17, la superposition de la zone de plus grande opacité E avec la première 12 et deuxième 13 structures optiquement variables définissent respectivement des première F et deuxième G zones optiquement variables.

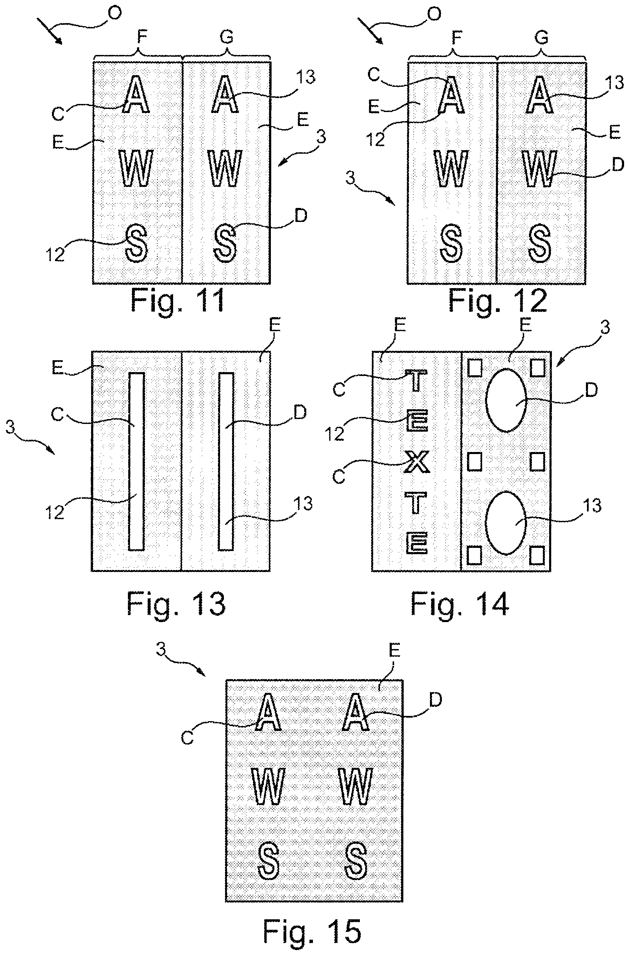

On observe ainsi par exemple le changement d'aspect illustré aux figures 11 et 12. Suivant une première direction d'observation O, illustrée figure 11, la première zone optiquement variable F apparaît plus claire que la deuxième zone G. La première structure optiquement variable 12, observée au travers de la zone de moindre opacité C, apparaît transparente. Dans la deuxième zone optiquement variable G, les particules plaquettaires de la deuxième structure optiquement variable 13 apparaissent réfléchissantes lorsqu'observées au travers de la zone de moindre opacité D. Sur la figure 12, l'effet inverse de celui observé sur la figure 11 est obtenu, par variation de l'angle d'observation.

Dans le cas où l'élément de sécurité est un fil de sécurité s'étendant selon un axe longitudinal X, on peut réaliser l'élément de sécurité de telle sorte que le changement d'aspect des zones F et G et/ou C et D ait lieu quand la direction d'observation tourne autour d'un axe parallèle ou confondu avec l'axe longitudinal X du fil, ou en variante, autour d'un axe perpendiculaire audit axe longitudinal. L'écart angulaire entre les deux directions d'observation est par exemple d'au moins 5°, mieux 15°. L'écart angulaire est par exemple compris entre 5° et 50°, mieux entre 15° et 20°.

Les particules plaquettaires de la première structure 12 et de la deuxième structure 13 optiquement variables sont orientées en fonction de l'axe autour duquel doit tourner la direction d'observation pour observer le changement d'aspect recherché. Par exemple, les particules plaquettaires sont orientées, l'axe X étant vertical pour les besoins de l'observation, respectivement vers la gauche et vers la droite pour obtenir un changement d'aspect lorsqu'on tourne de gauche à droite ou inversement.

De préférence, comme illustré à la figure 13, la zone de l'élément de sécurité couverte par les première C et deuxième D zones de moindre opacité est moins étendue que la surface couverte par la zone environnante de plus grande opacité E.

De préférence, comme illustré sur la figure 14, les régions des première 12 et deuxième 13 structures optiquement variables, observées au travers des première C et deuxième D zones de moindre opacité, prennent la forme d'une lettre et/ou d'un texte et/ou d'un dessin et/ou d'un autre motif, que l'on peut retrouver ailleurs sur le document.

De préférence, les zones C et D reproduisent des motifs identiques, comme illustré par exemple sur les figures 11 et 12, mais peuvent aussi reproduire des motifs différents, comme illustré sur la figure 14.

L'élément de sécurité 3 peut être observé de face en lumière transmise. On dispose alors l'élément de sécurité entre une source lumineuse et l'observateur. La lumière émise par la source traverse l'élément de sécurité. Dans ce mode d'observation et d'authentification, illustré figure 15, lorsqu'observés simultanément, les motifs définis par les zones de moindre opacité C et D sont partiellement opaques et présentent un aspect visuel sensiblement identique. De préférence, à cet effet, les angles d'orientation des particules plaquettaires par rapport à la normale sont sensiblement les mêmes, en valeur absolue. Les zones optiquement variables F et G peuvent présenter un aspect sensiblement identique. Elles peuvent paraître plus sombres que les motifs définis par les structures de moindre opacité C et D, car la lumière doit traverser la zone E de plus grande opacité.

Les figures 16, 17 et 18 présentent un mode de réalisation selon l'invention où la structure d'opacité variable 16 définit des images pixellisées 70 et 71, par exemple divulgué dans EP-A-1674286, représentant par exemple le visage d'une femme et se superposant respectivement aux première 12 et deuxième 13 structures optiquement variables. Ces images définissent la zone de plus grande opacité E.

La structure 16 d'opacité variable comporte des première C et deuxième D zones de moindre opacité correspondant par exemple à des ajours 72 et 73, par exemple situés au niveau des yeux, des images 70 et 71. Chacune de ces images comporte avantageusement une succession d'éléments, par exemple des points ou des lignes, par exemple de différentes couleurs, arrangée de telle manière qu'un effet visuel de profondeur soit produit, lorsqu'en lumière transmise, les éléments de l'image pixellisée paraissent plus ou moins éloignés à l'observateur. Cet effet visuel tridimensionnel est par exemple lié à la taille (par exemple le diamètre des points ou l'épaisseur des lignes), la position ou la densité des éléments de l'image pixellisée.

Lorsque l'élément de sécurité 3 est observé en réflexion selon la direction O, la première structure optiquement variable 12 apparaît transparente au travers de la zone de moindre opacité C, comme illustré figure 16. La superposition de la zone de plus grande opacité E et de la première structure 12 optiquement variable n'étant pas totalement opaque, l'image pixellisée 70 peut apparaître visuellement en profondeur. Selon cette direction O, la deuxième structure optiquement variable 13 est réfléchissante lorsqu'observée en réflexion. Les yeux de l'image 70 apparaissent réfléchissants. Aucune lumière ne peut être transmise au travers de l'élément de sécurité dans la zone se superposant à la deuxième structure 13. Sur cette zone, l'image 71 présente l'aspect d'une image plane, et n'apparait pas visuellement en profondeur. Elle apparaît en outre plus sombre que la zone de plus grande opacité E se superposant à la première structure optiquement variable 12.

Sur la figure 17, c'est l'effet inverse qui se produit, selon la direction d'observation Q, symétrique de la première par rapport à la normale.

Sur la figure 18, l'élément de sécurité 3 est observé de face en lumière transmise, selon une direction perpendiculaire à l'élément de sécurité. Dans ce cas, les deux zones optiquement variables F et G, telles que définies par exemple sur la figure 3, apparaissent visuellement en profondeur à l'observateur, avec un niveau de clarté sensiblement identique.

Sur la figure 19, on a illustré la possibilité pour la zone environnante E d'être discontinue à l'échelle microscopique, comportant une trame 77 qui s'étend par exemple d'un bord 78 à l'autre 79 et la sépare en plusieurs parties distinctes. Cette trame peut apparaître comme étant continue lorsqu'observée en réflexion, les lignes moins opaques 77a étant par exemple plus nombreuses, étroites et rapprochées qu'illustré.

En variante, comme illustré par exemple figures 13 et 14, la zone environnante E peut être continue.

Dans les exemples ci-dessus, la structure d'opacité variable 16 peut être une métallisation/démétallisation, par exemple obtenue comme décrit dans le brevet EP-A-279880.

Cette structure d'opacité variable peut aussi dans une variante être réalisée à partir d'une impression avec une encre présentant une opacité faible, voire transparente, comportant un pigment photosensible, par exemple à au rayonnement d'un laser. En traitant sélectivement l'encre avec le rayonnement laser, une zone de plus grande opacité est obtenue. Le pigment photosensible exposé au rayonnement laser modifie les propriétés optiques de la zone traitée pour la rendre plus opaque.

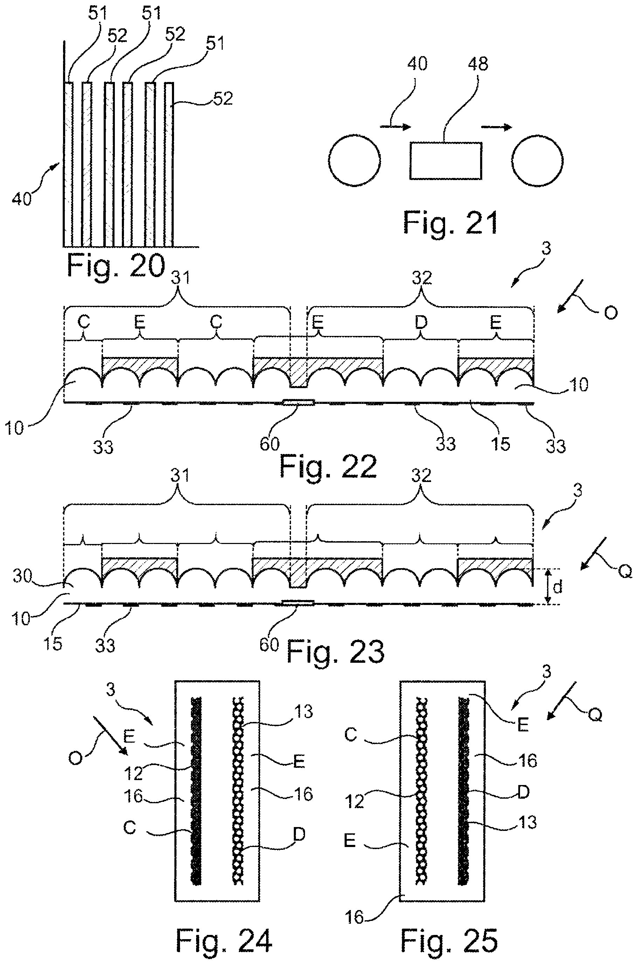

Pour réaliser un élément de sécurité 3, on peut partir d'un film 40, comme illustré aux figures 20 et 21. La première structure optiquement variable est réalisée sur le film sous la forme de bandes parallèles espacées 51 et la deuxième structure optiquement variable est réalisée sous la forme de bandes parallèles espacées 52, entrelacées avec les bandes 51 formées par la première structure, par exemple avec un espacement entre les bandes de la première structure et les bandes de la deuxième structure. Le film est découpé à mi- largeur des bandes de la première structure et des bandes de la deuxième structure pour constituer une pluralité d'éléments de sécurité 3.

Les bandes 51 et 52 font par exemple entre 3 et 5 mm de large.

Deux bandes peuvent être par exemple espacées d'une distance de 0,5 mm. En variante, ces bandes peuvent partiellement se recouvrir, sur une distance inférieure à 0,5 mm.

Le dépôt des couches de particules plaquettaires 12 peut se faire par passage du film à un poste d'impression 48, comme illustré à la figure 21.

Le film 40 est par exemple déroulé une première fois avant de passer au poste d'impression 48, pour former les bandes 51 correspondant aux couches de particules plaquettaires 12. Puis, le film 40 est retourné, par exemple en effectuant une rotation autour d'un axe perpendiculaire à la surface du film, et réintroduit dans la machine pour former les bandes 52 correspondant aux couches de particules plaquettaires 13. Du fait du retournement, les particules plaquettaires des couches 12 et 13 sont orientées différemment sur l'élément de sécurité. Le film est ensuite découpé, par exemple pour former des éléments de sécurité, notamment des fils de sécurité, qui sont enroulés sur de multiples bobines.

Les structures optiquement variables peuvent être réalisées autrement qu'avec des pigments magnétiques orientables.

Par exemple, les structures optiquement variables sont réalisées à l'aide de réseaux lenticulaires, comme illustré sur les figures 22 à 25, et sont recouvertes par la structure d'opacité variable 16, par exemple réalisée par impression. En particulier, l'encre est déposée là où la zone de plus grande opacité E doit être formée.

Les lentilles 30 du réseau lenticulaire sont par exemple cylindriques ou hémisphériques concaves, convexes ou de Fresnel, et sont par exemple disposées selon un arrangement hexagonal, hexagonal compact ou rectangulaire. On entend par hexagonal compact un arrangement selon lequel les lentilles sont incluses dans une forme hexagonale sans espace entre elles. De préférence, le réseau lenticulaire est constitué de lentilles hémisphériques coplanaires disposées en quinconce, de lentilles hexagonales agencées en « nid d'abeilles » ou de lentilles cylindriques juxtaposées.

Le réseau lenticulaire peut être réalisé par embossage, notamment par thermo-embossage ou par embossage suivi d'une réticulation aux ultraviolets, ou par moulage. Le réseau lenticulaire peut être imprimé et comporter des lentilles 30 juxtaposées ou non, par exemple formées par impression d'un polymère réticulable aux UV, par exemple par sérigraphie, héliogravure, typographie, ou encore par impression jet d'encre.

Un premier motif ou couleur peut être observé à travers le réseau lenticulaire sous un premier angle d'observation dans la première zone C, un deuxième motif ou couleur observable à travers le réseau lenticulaire sous un deuxième angle d'observation, différent du premier angle, dans la deuxième zone D.

Par exemple, on observe pour une direction d'observation une couleur noire sur la zone C seulement, comme illustré à la figure 24, et pour un autre angle d'observation il y a interversion des aspects des zones C et D, comme illustré sur la figure 25.

La figure 24 correspond à l'aspect pour une observation selon la direction O de la figure 22 et la figure 25 à l'aspect selon la direction d'observation Q de la figure 23.

Selon l'exemple de réalisation illustré à la figure 22, des éléments de motif 33 disjoints sont disposés chacun en regard d'une lentille 30 correspondante. Dans la première zone 31, chaque élément de motif 33 est disposé d'un premier côté par rapport au centre ou à l'axe de la lentille 30 correspondante, et chaque élément de motif dans la deuxième zone 32 est disposé d'un deuxième côté, opposé au premier côté, par rapport au centre ou à l'axe de la lentille correspondante.

Ainsi, dans la première zone 31 chaque élément de motif 33 est disposé de la même manière par rapport à la lentille 30 correspondante. En particulier, les éléments de motif 33 peuvent être distribués de la même manière que les lentilles 30 correspondantes, c'est-à-dire avec le même pas d'écartement et sans décalage angulaire, de sorte à éviter tout effet de Moiré.

Par ailleurs, un seul élément de motif 33 est disposé en regard d'une lentille correspondante 30. On associe donc chaque lentille 30 à un élément de motif unique 33 pour faire apparaître et disparaître l'élément de motif. En particulier, on peut éviter de disposer plusieurs éléments de motif 33 en regard d'une seule lentille 30. On peut éviter également de disposer plusieurs images partielles constituant une image entrelacée en regard d'une seule lentille pour générer des effets optiques complexes difficiles à distinguer.

Les éléments de motif 33 peuvent être obtenus par des perforations, dépôts et/ou des vides de matériau. Par exemple, les éléments de motif 33 sont obtenus par une métallisation ou une démétallisation de matériaux sélectionnés parmi des métaux, des composés métalliques ou des alliages, tel que cela est décrit dans le document EP 279880. Alternativement, les éléments de motif 33 sont obtenus par une impression sélective, en positif ou négatif, d'une encre contenant des pigments choisis parmi des pigments métalliques, de noir de carbone, des pigments magnétiques, des pigments colorés, des pigments visibles sous un rayonnement UV ou IR ou un mélange de ces derniers.

Selon un exemple de réalisation, la distance entre le réseau lenticulaire et chaque élément de motif 33 est inférieure ou égale à la distance focale des lentilles 30 du réseau lenticulaire. La distance entre le sommet de chaque lentille 30 et l'élément de motif 33 est de préférence supérieure au rayon de courbure au centre de la lentille.

Dans le cas de l'exemple d'une lentille hémisphérique tronquée, encore dénommée «lentille plan-convexe », c'est-à-dire résultant de l'association d'un dioptre plan et d'un dioptre sphérique, le rayon de courbure au centre d'une lentille, la hauteur et le rayon de la lentille sont liées par la formule H(2Rc - H) = r², soit H = Rc - √(Rc² - r²), dans laquelle « Rc » est le rayon de courbure au centre de la lentille, « H » la hauteur de la lentille et « r » est le rayon de la lentille au niveau du dioptre plan.

La hauteur d'une lentille peut donc être déterminée à partir du rayon de courbure et du diamètre de la lentille.

Un compromis satisfaisant entre épaisseur et résolution est obtenu pour un réseau lenticulaire dont les lentilles 30 présentent un diamètre compris entre 15 et 50 microns pour un rayon de courbure compris entre 10 et 40 microns. Par exemple, pour un réseau lenticulaire dont les lentilles présentent un diamètre de 20 microns, pour un rayon de courbure de 15 microns les éléments de motif 33 sont de préférence situés à une distance comprise entre 20 et 30 microns du sommet des lentilles.

Pour un réseau lenticulaire dont les lentilles présentent un diamètre de 50 microns pour un rayon de courbure de 30 microns, les éléments de motif sont de préférence situés à une distance comprise entre 25 et 45 microns.

De préférence, chaque élément de motif 33 est situé sur une face du support 10 en regard d'une lentille 30 correspondante, de sorte à présenter une largeur au plus égale au rayon de la lentille correspondante. Cet agencement permet de faire apparaître et disparaître l'élément de motif 33 de manière adéquate, c'est-à-dire que le temps d'apparition est sensiblement équivalent au temps de disparition lorsque l'observateur fait varier l'angle d'observation de manière uniforme dans le temps.

Avec l'agencement défini ci-dessus, l'élément de sécurité présente une épaisseur réduite tout en conservant un effet d'apparition et de disparition particulièrement efficace pour l'intégration dans des documents sécurisés, et cela même pour des documents relativement fins tels que des billets de banques.

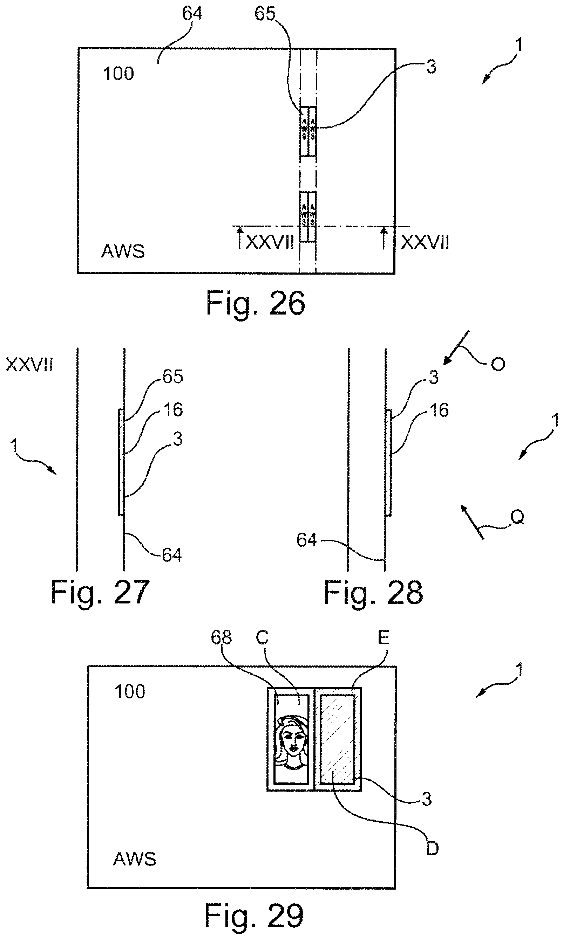

Les figures 26 et 27 représentent un document sécurisé 1, par exemple un billet de banque, dans lequel est inséré en fenêtres un élément sécurisé 3, tel qu'illustré par exemple sur la figure 2, mais dans lequel l'aire occupée par la zone E de plus grande opacité n'excède pas nécessairement celle occupée par les zones de moindre opacité C et D. L'élément de sécurité 3 est visible au travers d'au moins une fenêtre 65, au niveau de laquelle il affleure de la surface du document comme illustré à la figure 27. L'élément de sécurité est positionné de sorte que la structure d'opacité variable 16 soit orientée vers l'extérieur du document, comme illustré figure 27. De cette façon, les première et deuxième structures optiquement variables 12 et 13 ne sont observables, en lumière réfléchie, que depuis la face 64 du document sur laquelle la structure d'opacité variable est visible.

Dans le cas d'une incorporation en fenêtres, comme dans l'exemple de la figure 26, la zone environnante de plus grande opacité E présente de préférence une couleur uniforme sensiblement identique à la couleur de la partie adjacente de la face 64 du document sur laquelle l'élément de sécurité apparaît. La frontière entre l'élément de sécurité 3 et le document de sécurité 1 n'est ainsi pas clairement visible pour l'observateur, et seules les zones de moindre opacité C et D changent clairement d'aspect quand la direction d'observation change.

Comme illustré sur la figure 28, l'élément de sécurité 3 peut aussi être disposé en surface du document de sécurité 1, par exemple sous la forme d'un foil. L'élément de sécurité 3 est positionné de sorte que la structure d'opacité variable 16 soit tournée vers l'observateur.

Pour une direction d'observation O, pour laquelle l'une des structures optiquement variables apparait transparente, la couleur du substrat ou d'un motif imprimé sur la face 64 et situé sous la zone de moindre opacité C ou D est visible à travers la structure d'opacité variable 16. Pour une direction d'observation Q, on observe en réflexion l'aspect réfléchissant des paillettes dans les zones C ou D.

Sur la figure 29, le document sécurisé comporte un élément de sécurité 3 disposé par exemple en surface ou en fenêtre, la surface occupée par les première C et deuxième zones D de moindre opacité étant supérieure à l'aire de la surface de la zone environnante E de plus grande opacité. Par exemple, les zones C et D recouvrent au moins une image 68 telle qu'une photographie d'identité, visible seulement sous l'angle d'observation pour lequel l'une des structures optiquement variables 12 et 13 apparait transparente. La zone environnante E de plus grande opacité peut définir un cadre autour de cette image.

Le document sécurisé peut comporter d'autres éléments de sécurité de premier niveau et/ou au moins un élément de sécurité de deuxième niveau et/ou de troisième niveau.

Le document 1 peut en particulier comporter les autres éléments de sécurité suivants, seuls ou en combinaison :
- des colorants et/ou des pigments luminescents et/ou des pigments interférentiels et/ou des pigments à cristaux liquides, notamment sous forme imprimée ou mélangée à au moins une couche constitutive du document,
- des composants, colorants et/ou des pigments photochromes ou thermochromes, notamment sous forme imprimée ou mélangée à au moins une couche constitutive du document,
- un absorbeur ultraviolet (UV), notamment sous forme enduite ou mélangée à au moins une couche constitutive du document,
- un matériau spécifique collecteur de lumière, par exemple du type « guide d'ondes », par exemple un matériau collecteur de lumière luminescent comme les films polymères à base de polycarbonate commercialisés par la société BAYER sous la dénomination LISA^{®},
- un film multicouche interférentiel,
- une structure à effets optiques variables à base de pigments interférentiels ou de cristaux liquides,
- une couche biréfringente ou polarisante,
- une structure de diffraction,
- une image embossée,
- des moyens produisant un "effet de Moiré", un tel effet pouvant par exemple faire apparaître un motif produit par la superposition de deux éléments de sécurité sur le document, par exemple par le rapprochement de lignes de deux éléments de sécurité,
- un élément réfractif partiellement réfléchissant,
- un filtre coloré.
- un autre foil métallisé, goniochromatique ou holographique,
- une couche à effet optique variable à base de pigments interférentiels ou de cristaux liquides,
- un élément de sécurité plat et de format relativement petit tel qu'une planchette, visible ou non visible, notamment luminescent, avec ou sans dispositif électronique,
- des particules ou agglomérats de particules de pigments ou colorants de type HI-LITE, visibles ou non visibles, notamment luminescents,
- des fibres de sécurité, notamment métalliques, magnétiques (à magnétisme doux et/ou dur), ou absorbantes, ou excitables aux ultraviolets, le visible ou l'infrarouge, et en particulier le proche infrarouge (NIR),
- une sécurité lisible automatiquement ayant des caractéristiques spécifiques et mesurables de luminescence (par exemple fluorescence, phosphorescence), d'absorption de la lumière (par exemple ultraviolet, visible ou infrarouge), d'activité Raman, de magnétisme, d'interaction micro-ondes, d'interaction aux rayons X ou de conductivité électrique.

Un ou plusieurs éléments de sécurité supplémentaires tels que définis ci-dessus peuvent être présents dans le document et/ou dans une ou plusieurs couches constitutives du document ou dans un ou plusieurs éléments de sécurité incorporés au document et/ou à une ou plusieurs couches constitutives du document.

L'une au moins des couches constitutives du document peut aussi comporter un élément de sécurité de premier niveau tel qu'un filigrane ou un pseudo-filigrane se superposant au moins partiellement à une région translucide du document.

L'invention n'est pas limitée aux exemples illustrés.

Le document sécurisé incluant l'élément de sécurité selon l'invention peut encore être un document tel qu'un passeport, une carte d'identité, un permis de conduire, une carte à jouer ou à collectionner interactive, un moyen de paiement autre qu'un billet de banque, notamment une carte de paiement, un bon d'achat ou un voucher, une carte de transport, une carte de fidélité, une carte de prestation ou une carte d'abonnement.

Des particularités de réalisation des exemples décrits peuvent se combiner au sein de variantes non illustrées.

L'élément de sécurité selon l'invention peut être aussi réalisé en mettant en œuvre les enseignements du brevet FR 2 877 609 B1 ou de la demande WO 2004/106078 A1.

Par exemple, l'élément de sécurité selon l'invention peut comporter :
- au moins une première zone fluorescente capable d'émettre par fluorescence, dans une condition d'éclairage prédéfinie, une lumière visible d'une première couleur,
- au moins une deuxième zone fluorescente capable d'émettre par fluorescence, dans la condition d'éclairage prédéfinie, une lumière visible d'une deuxième couleur, différente de la première, les première et deuxième zones fluorescentes étant respectivement observables depuis des faces opposées de l'élément de sécurité.

La structure d'opacité variable et/ou la troisième structure de sécurité et/ou le motif sous-jacent peuvent être réalisées pour constituer l'une au moins des zones fluorescentes.

Avantageusement, les première et deuxième zones fluorescentes se superposent au moins partiellement et de manière à ce que, dans la condition d'éclairage prédéfinie, la superposition des deux zones fluorescentes apparaisse en lumière transmise d'une troisième couleur, différente des première et deuxième couleurs. Cette réalisation de l'élément de sécurité est illustrée sur la figure 4, où le motif sous jacent 26 se superpose à l'élément d'opacité variable 16, définissant une zone de superposition K.

Le motif sous jacent 26 peut définir une première zone fluorescente et la structure d'opacité variable 16 peut définir une deuxième zone fluorescente. L'authentification et/ou l'identification d'un article ou document incorporant un tel élément peut comprendre deux étapes d'observation, dans la condition d'éclairage prédéfinie, en réflexion, des première et deuxième couleurs, et au moins une étape d'observation en lumière transmise pour observer la troisième couleur.

Par exemple, comme illustré sur la figure 4, sous un éclairage UV en réflexion, le motif sous jacent 26, apparaît jaune selon la direction d'observation M et la structure d'opacité variable 16 apparait bleue selon la direction N, du côté opposé. Observé en lumière transmise, l'élément de sécurité, au travers de la zone de superposition K, présente une couleur violette lorsqu'il est observé depuis une première face et apparaît sensiblement blanc lorsqu'il est observé depuis une deuxième face, opposée à la première.

L'élément de sécurité peut encore comporter :
- au moins une première composition fluorescente,
- au moins une deuxième composition phosphorescente, les première et deuxième compositions étant excitables simultanément par un illuminant prédéfini depuis une même face de la structure.

Les deux compositions peuvent constituer la troisième structure de sécurité.

La première composition fluorescente peut être superposée, au moins partiellement, à la deuxième composition phosphorescente.

L'une des première et deuxième compositions peut former un aplat qui est superposé à l'autre des première et deuxième compositions, laquelle forme au moins un motif.

L'une des première et deuxième compositions peut former au moins un motif qui, à l'extinction de l'éclairage par l'illuminant prédéfini, apparaît ou disparaît, ou qui change d'apparence en passant d'un motif positif ou négatif ou d'une couleur à une autre.

La première composition fluorescente peut émettre, sous l'éclairage par l'illuminant prédéfini, une lumière visible d'une première couleur, la deuxième composition phosphorescente émettant, sous éclairage par l'illuminant prédéfini, une lumière visible d'une deuxième couleur, différente de la première, et au moins une zone de superposition des première et deuxième compositions fluorescente et phosphorescente émettant, sous éclairage par illuminant prédéfini, une lumière visible d'une troisième couleur, résultant de la synthèse additive des première et deuxième couleurs.

Les expressions « comportant un » ou « comprenant un » sont synonymes de « comportant au moins un » ou « comprenant au moins un ».

## Revendications

1. Elément de sécurité multicouche comportant :
- un support (10),
- une structure optiquement variable (12,13) portée par le support, de façon à être réfléchissante dans une première direction d'observation, et transparente dans une deuxième direction d'observation,
- une image pixellisée (70,71), superposée à la structure optiquement variable, conférant une impression de relief lorsqu'observée en lumière transmise dans la deuxième direction d'observation, cette impression de relief diminuant en observation en lumière réfléchie dans la première direction d'observation,
l'image pixellisée produisant un effet visuel de profondeur quand observée en lumière transmise,
un effet visuel de profondeur étant un effet visuel par lequel différents éléments définissant une image plane paraissent plus ou moins éloignés à un observateur en raison d'un effet de perspective,
l'image pixellisée comportant un ensemble de points paraissant plus ou moins éloignés, lorsqu'observée en lumière transmise, les points étant de formes et/ou de tailles variées.

2. Elément de sécurité selon la revendication 1, la structure optiquement variable étant sous forme de particules plaquettaires orientées.

3. Elément de sécurité selon la revendication précédente, les particules plaquettaires étant magnétiques.

4. Elément de sécurité selon la revendication 1, la structure optiquement variable comportant un réseau lenticulaire, les lentilles du réseau lenticulaire permettant d'observer ou non, selon l'angle d'observation, au moins un élément de motif sous-jacent.

5. Elément de sécurité selon l'une quelconque des revendications précédente, la structure optiquement variable s'étendant longitudinalement sur le support, notamment sous la forme d'une bande, notamment de largeur constante.

6. Elément de sécurité selon l'une quelconque des revendications précédentes, la structure optiquement variable comportant un composé luminescent, par exemple fluorescent, présent selon un ou plusieurs motifs.

7. Elément de sécurité selon l'une quelconque des revendications précédentes, l'image pixellisée représentant un portrait, un animal, un paysage, un symbole, notamment alphanumérique, une ligne, un guilloché.

8. Elément de sécurité selon l'une quelconque des revendications précédentes, les points s'alignant en lignes inclinées selon des angles spécifiques, avec une modulation fréquentielle spécifique.

9. Elément de sécurité selon l'une quelconque des revendications précédentes, l'image pixellisée comportant des points observables sous rayonnement ultraviolet UV et/ou infrarouge IR, ces points contenant notamment des pigments visibles sous rayonnement UV ou IR et invisibles en lumière du jour.

10. Elément de sécurité selon l'une quelconque des revendications précédentes, l'image pixellisée contenant des points qui, au moins partiellement, représentent des données codées, en particulier sous forme matricielle.

11. Elément de sécurité selon l'une quelconque des revendications précédentes, l'image pixellisée étant constituée d'au moins un matériau sélectionné parmi les métaux, les alliages, les vernis et les encres métalliques, les vernis et les laques d'apparence métallique.

12. Elément de sécurité selon l'une quelconque des revendications précédentes, l'image pixellisée étant réalisée en plusieurs couches, appliquées sur le support de l'élément de sécurité, et/ou sur la structure optiquement variable, et ayant de préférence différentes densités optiques.

13. Elément de sécurité selon l'une quelconque des revendications précédentes, le support étant réalisé dans une matière thermoplastique, de préférence une matière thermoplastique transparente, notamment du polyester ou du PET.

## Patentansprüche

1. Mehrschichtiges Sicherheitselement, umfassend:
- einen Träger (10),
- eine optisch variable Struktur (12, 13), die von dem Träger getragen wird, so dass sie in einer ersten Betrachtungsrichtung reflektierend ist und in einer zweiten Betrachtungsrichtung transparent ist,
- ein gepixeltes Bild (16, 70, 71, 72, 73), das der optisch variablen Struktur überlagert ist und bei seiner Betrachtung im Durchlicht in der zweiten Betrachtungsrichtung einen Reliefeindruck vermittelt, wobei dieser Reliefeindruck bei Betrachtung im Auflicht in der ersten Betrachtungsrichtung nachlässt,
wobei das gepixelte Bild bei seiner Betrachtung im Durchlicht eine visuelle Tiefenwirkung erzeugt,
wobei eine visuelle Tiefenwirkung eine visuelle Wirkung ist, bei der verschiedene ein ebenes Bild definierende Elemente aufgrund einer perspektivischen Wirkung von einem Betrachter mehr oder minder entfernt zu sein scheinen,
wobei das gepixelte Bild eine Menge von Punkten umfasst, die bei seiner Betrachtung im Durchlicht mehr oder minder entfernt zu sein scheinen, wobei die Punkte unterschiedliche Formen und/oder Größen aufweisen.

2. Sicherheitselement nach Anspruch 1, wobei die optisch variable Struktur in Form von ausgerichteten plättchenförmigen Partikeln vorliegt.

3. Sicherheitselement nach dem vorhergehenden Anspruch, wobei die plättchenförmigen Partikel magnetisch sind.

4. Sicherheitselement nach Anspruch 1, wobei die optisch variable Struktur ein Linsenraster umfasst, wobei die Linsen des Linsenrasters es ermöglichen, je nach Betrachtungswinkel mindestens ein darunterliegendes Musterelement zu betrachten oder nicht.

5. Sicherheitselement nach einem der vorhergehenden Ansprüche, wobei sich die optisch variable Struktur längs auf dem Träger erstreckt, insbesondere in Form eine Streifens, insbesondere mit konstanter Breite.

6. Sicherheitselement nach einem der vorhergehenden Ansprüche, wobei die optisch variable Struktur eine lumineszente, beispielsweise fluoreszierende, Verbindung umfasst, die gemäß einem oder mehreren Mustern vorhanden ist.

7. Sicherheitselement nach einem der vorhergehenden Ansprüche, wobei das gepixelte Bild ein Portrait, ein Tier, eine Landschaft, ein Symbol, insbesondere ein alphanumerisches, eine Linie, eine Guilloche darstellt.

8. Sicherheitselement nach einem der vorhergehenden Ansprüche, wobei die Punkte in gemäß spezifischen Winkeln geneigten Linien ausgerichtet sind, mit einer spezifischen Frequenzmodulation.

9. Sicherheitselement nach einem der vorhergehenden Ansprüche, wobei das gepixelte Bild Punkte umfasst, die unter ultravioletter UV-Strahlung und/oder infraroter IR-Strahlung betrachtbar sind, wobei diese Punkte insbesondere Pigmente enthalten, die unter UV- oder IR-Strahlung sichtbar und bei Tageslicht unsichtbar sind.

10. Sicherheitselement nach einem der vorhergehenden Ansprüche, wobei das gepixelte Bild Punkte enthält, die, zumindest teilweise, codierte Daten darstellen, insbesondere in Matrixform.

11. Sicherheitselement nach einem der vorhergehenden Ansprüche, wobei das gepixelte Bild aus mindestens einem Material besteht, das unter den Metallen, den Legierungen, den metallischen Firnissen und Druckfarben, den Firnissen und Lacken mit metallischem Erscheinungsbild gewählt ist.

12. Sicherheitselement nach einem der vorhergehenden Ansprüche, wobei das gepixelte Bild aus mehreren Schichten ausgeführt ist, die auf den Träger des Sicherheitselements und/oder auf die optisch variable Struktur appliziert sind und bevorzugt unterschiedliche optische Dichten aufweisen.

13. Sicherheitselement nach einem der vorhergehenden Ansprüche, wobei der Träger aus einem thermoplastischen Werkstoff ausgeführt ist, bevorzugt aus einem transparenten thermoplastischen Werkstoff, insbesondere Polyester oder PET.

## Claims

1. Multilayer security element comprising:
- a support (10),
- an optically variable structure (12, 13) borne by the support, so as to be reflective in a first observation direction and transparent in a second observation direction,
- a pixelated image (16, 70, 71, 72, 73), superposed on the optically variable structure, giving the impression of relief when observed in transmitted light in the second observation direction, this impression of relief decreasing when observed in reflected light in the first observation direction,
the pixelated image producing a visual depth effect when observed in transmitted light,
a visual depth effect being a visual effect by way of which various elements defining a flat image appear to be further away from or closer to an observer owing to a perspective effect,
the pixelated image comprising a set of points that appear to be further away or closer when observed in transmitted light, the points being of varied shapes and/or sizes.

2. Security element according to Claim 1, the optically variable structure being in the form of oriented platelet-type particles.

3. Security element according to the preceding claim, the platelet-type particles being magnetic.

4. Security element according to Claim 1, the optically variable structure comprising a lenticular array, the lenses of the lenticular array allowing or not allowing at least one underlying pattern element to be observed depending on the observation angle.

5. Security element according to any one of the preceding claims, the optically variable structure extending longitudinally over the support, in particular in the form of a strip, in particular of constant width.

6. Security element according to any one of the preceding claims, the optically variable structure comprising a luminescent compound, for example a fluorescent compound, present in one or more patterns.

7. Security element according to any one of the preceding claims, the pixelated image representing a portrait, an animal, a landscape, a symbol, in particular an alphanumeric symbol, a line or a guilloche.

8. Security element according to any one of the preceding claims, the points aligning in rows that are inclined at specific angles with a specific frequency modulation.

9. Security element according to any one of the preceding claims, the pixelated image comprising points able to be observed under ultraviolet UV and/or infrared IR radiation, these points in particular containing pigments visible under UV or IR radiation and invisible in daylight.

10. Security element according to any one of the preceding claims, the pixelated image containing points that at least partially represent coded data, in particular coded in matrix form.

11. Security element according to any one of the preceding claims, the pixelated image consisting of at least one material selected from among metals, alloys, varnishes and metallic inks, varnishes and lacquers with a metallic appearance.

12. Security element according to any one of the preceding claims, the pixelated image being formed in multiple layers applied to the support of the security element, and/or to the optically variable structure, and preferably having various optical densities.

13. Security element according to any one of the preceding claims, the support being made from a thermoplastic material, preferably a transparent thermoplastic material, in particular polyester or PET.
